# EUROPEAN PATENT APPLICATION

(11) **EP 4 776 598 A1**
(43) Date of publication of application: **15.07.2026**
(21) Application number: 25195797.3
(22) Date of filing: 13.08.2025
(51) Int. Cl.: H04L 67/00

(54) **LOAD BALANCING METHOD, APPARATUS, DEVICE AND STORAGE MEDIUM FOR MESSAGE QUEUE SYSTEM**

(30) Priority: 14.01.2025 CN 202510059900
(71) Applicant: Beijing Volcano Engine Technology Co., Ltd., Beijing 100190 (CN)
(72) Inventor: Li, Yuzhou, Beijing, 100028 (CN); Shen, Hui, Beijing, 100028 (CN); Yang, Guodong, Beijing, 100028 (CN); Gong, Yunfei, Beijing, 100028 (CN); Gao, Changli, Beijing, 100028 (CN)
(74) Representative: Marks & Clerk LLP

(57) **Abstract**

Embodiments of the present disclosure provides a load balancing method and apparatus for a message queue system, a device and a storage medium. The message queue system includes consumer nodes, proxy nodes, and message storage nodes, and the method includes: triggering, in response to a change in a connection state of a first consumer node, a first proxy node to perform a load balancing operation for consumer nodes connected to the first proxy node, where the first consumer node is any one of the consumer nodes, and the first proxy node is a proxy node connected to the first consumer node; and triggering, in response to a change in a connection state of a first message storage node, a second proxy node to perform a load balancing operation for the message storage nodes, where the second proxy node is a proxy node connected to the first message storage node.

## Description

### CROSS-REFERENCE TO RELATED APPLICATION

The present application claims priority to Chinese Patent Application No. 202510059900.1, filed on January 14, 2025, which is incorporated herein by reference in its entirety as a part of the present application.

### TECHNICAL FIELD

The present application relates to a load balancing method and apparatus for a message queue system, and a device.

### BACKGROUND

In a message queue system, users may be divided into producers and consumers according to roles. The producer refers to a message generation party, and after the message is generated, the message is sent to a message queue. The consumer refers to a message using party, and after the producer sends a message to the message queue, the message queue delivers the message to the consumer.

In a distributed message queue system, the message queue system includes a plurality of devices, and a message consumer may also include a plurality of devices. In this case, a load balancing system is required to adjust message delivery to ensure overall uniform consumption of the plurality of devices of the consumer. In addition, the load balancing system needs to perform corresponding load balancing in scenarios such as message queue system adjustment and consumer device distribution adjustment to ensure load balancing of the consumer. At this time, the load balancing of the message queue system determines the overall consumption performance of the message queue system.

At present, a single-layer load balancing system is usually used in the load balancing system. Changes in consumer nodes and message storage nodes cause the overall message queue system to perform load balancing, resulting in an excessively large scope of influence of load balancing policy adjustment, which in turn leads to poor overall performance of the message queue system.

### SUMMARY

In view of this, embodiments of the present application provide a load balancing method and apparatus for a message queue system, and a device, to improve overall performance of the message queue system.

To solve the above problem, technical solutions provided by embodiments of the present application are as follows:
At least one embodiment of the present disclosure provides a load balancing method for a message queue system, where the message queue system includes consumer nodes, proxy nodes, and message storage nodes, and the method includes:
triggering, in response to a change in a connection state of a first consumer node, a first proxy node to perform a load balancing operation for consumer nodes connected to the first proxy node, where the first consumer node is any one of the consumer nodes, and the first proxy node is a proxy node connected to the first consumer node; and
triggering, in response to a change in a connection state of a first message storage node, a second proxy node to perform a load balancing operation for the message storage nodes, where the second proxy node is a proxy node connected to the first message storage node.

At least one embodiment of the present disclosure provides a load balancing apparatus for a message queue system, where the message queue system includes consumer nodes, proxy nodes, and message storage nodes, and the apparatus includes:
a first load balancing unit configured to trigger, in response to a change in a connection state of a first consumer node, a first proxy node to perform a load balancing operation for consumer nodes connected to the first proxy node, where the first consumer node is any one of the consumer nodes, and the first proxy node is a proxy node connected to the first consumer node; and
a second load balancing unit configured to trigger, in response to a change in a connection state of a first message storage node, a second proxy node to perform a load balancing operation for the message storage nodes, where the second proxy node is a proxy node connected to the first message storage node.

At least one embodiment of the present disclosure provides a load balancing device for a message queue system, including: a memory, a processor, and a computer program stored on the memory and executable on the processor, where the computer program, when executed by the processor, causes the load balancing method for the message queue system as described above to be implemented.

At least one embodiment of the present disclosure provides a computer-readable storage medium having stored thereon instructions that, when executed by a terminal device, cause the terminal device to perform the load balancing method for the message queue system as described above.

### BRIEF DESCRIPTION OF DRAWINGS

Fig. 1 is a schematic diagram of an exemplary application scenario provided by an embodiment of the present application;
Fig. 2 is a flowchart of a load balancing method for a message queue system provided by an embodiment of the present application;
Fig. 3 is a schematic diagram of an influence scope of Local Rebalance in an embodiment of the present application;
Fig. 4 is a schematic diagram of an influence scope of Remote Rebalance in an embodiment of the present application;
Fig. 5 is a schematic diagram of a load balancing apparatus for a message queue system provided by an embodiment of the present application; and
Fig. 6 is a schematic diagram of an electronic device provided by an embodiment of the present disclosure.

### DETAILED DESCRIPTION

In order to make the above objects, features and advantages of embodiments of the present disclosure more comprehensible, embodiments of the present disclosure are further described in detail below with reference to the drawings and specific implementations.

In order to understand and explain the technical solutions provided by embodiments of the present disclosure, the background art of the embodiments of the present disclosure is first described below.

In a message queue system (such as a Kafka system), data of a Topic is distributed on a plurality of different Broker nodes (that is, message storage nodes), and each Broker node is responsible for managing a partition of each Topic. The partition is a unit of parallel processing of producers and consumers. The number of partitions of a Topic limits the maximum number of active consumers in each consumer group. The consumer group classifies a plurality of consumers into a logical group to balance the load of the partitions. When a new consumer joins or the number of subscribed Topics changes, a rebalance operation is triggered, that is, a mechanism in which the ownership of a partition is transferred from one consumer to another consumer in the same consumer group.

In a message queue system (such as Rocketmq), data of a Topic is distributed on a plurality of different Broker nodes, and each Broker node has a data queue. The rebalance mechanism of Rocketmq refers to reallocating a plurality of queues under a Topic among a plurality of consumer instances (consumer nodes) under the same consumer group to maximize the parallelism of message processing.

The rebalance operation is an important operation for ensuring load balancing in the message queue system, but the rebalance operation also brings some side effects during the execution, such as consumption suspension, repeated consumption, and fluctuations in consumption traffic.

At present, in the design of message queue systems, actions that may trigger the rebalance operation include: operation and maintenance operations such as downtime and upgrade of a single server component (for example, a Broker node of Kafka or Rocketmq); expansion operation of a Topic, such as Kafka expanding a Partition or Rocketmq expanding a Queue; operations such as abnormal downtime and restart of a single consumer; active expansion or contraction of consumers; and change in subscription information of a Topic.

A single-layer load balancing system is usually used in the load balancing system. Changes in consumer nodes and message storage nodes cause the overall message queue system to perform load balancing. In addition, a decentralized load balancing system is usually used in the load balancing system. The decentralized load balancing system refers to a load balancing system that has no center node for overall consideration, only considers local optimal solutions, and runs a Rebalance task periodically.

Therefore, technical problems of the current solution include: the restart and addition of a consumer affect the normal consumption of other consumers, and the influence scope of the rebalance operation is relatively large and spreads to all consumers in the entire consumer group. Normal operation and maintenance operations of server nodes also have a relatively large-scale impact. Frequent rebalance operations reduce the message consumption speed instead, and most of the time is spent on repeated consumption and rebalance operations, which cannot be controlled by the existing load balancing mechanism, resulting in poor overall performance of the message queue system. In addition, the load balancing system is embedded in the message queue system and cannot be independently expanded when it reaches a bottleneck.

Based on this, embodiments of the present disclosure provide a load balancing method and apparatus for a message queue system, and a device. The original single-layer load balancing system is changed to a two-level load balancing based on proxy nodes, and load balancing is calculated by a center node and executed by the proxy nodes, to reduce the latency and influence scope of each load balancing of a consumer and improve the performance of the load balancing system.

Specifically, it is possible to reduce the influence scope of a single load balancing, including the influence scope of a restart and addition of a single consumer and the influence scope of an expansion and restart of a server, control the frequency of load balancing, and avoid frequent rebalance operations. The performance of the load balancing system is improved, and an independent distributed system may be used to replace the original service thread, to improve the fault tolerance and provide the independent expansion capability of the load balancing system.

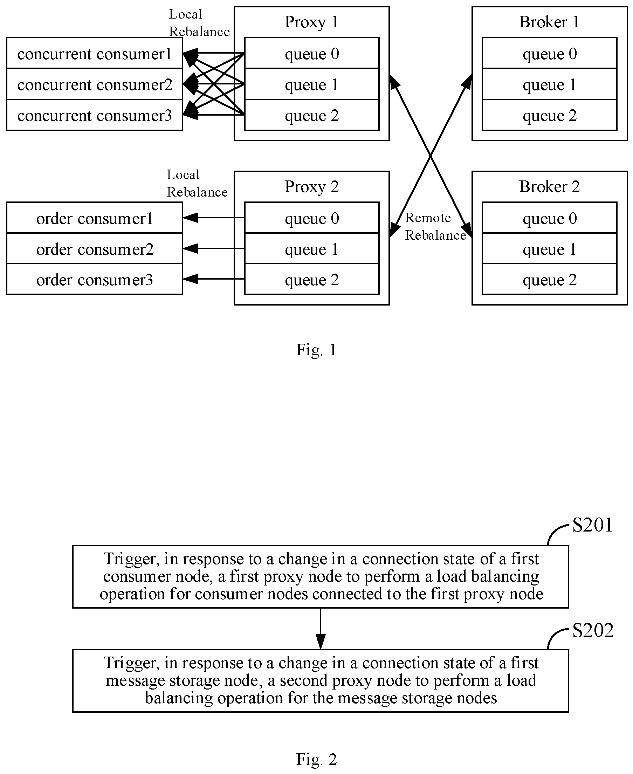

In order to understand the load balancing method for the message queue system provided by an embodiment of the present disclosure, description is made below with reference to the scenario example shown in Fig. 1. Fig. 1 is a schematic diagram of an exemplary disclosure scenario provided by an embodiment of the present disclosure.

The embodiments of the present disclosure may be applied to a message queue system. The message queue system includes server Broker nodes (message storage nodes), server proxy nodes, and consumer nodes. The Broker node is responsible for data storage, reading and writing, the proxy node is responsible for consumption management, and the consumer is used for consuming data. After data is written into the Broker node, the data is forwarded to the consumer through the Proxy node to complete a consumption action.

In the message queue system, each data partition of the Broker node is called a data queue, and one Broker node may include a plurality of queues. Each queue is uniquely allocated to one Proxy node, and the Proxy node is responsible for forwarding all traffic of the Queue. A plurality of queues may be allocated to each Proxy node. Each Consumer node is uniquely connected to one Proxy node and bears a part of traffic on the Proxy node.

Referring to Fig. 1, for example, data of a Topic is distributed on two Broker nodes, Broker1 and Broker2, and each Broker node includes three data queues, Queue0, Queue1, and Queue2. Each Queue is allocated to one Proxy node, and in the case where there are two Proxy nodes, Proxy1 and Proxy2, each Proxy node is allocated three Queues. Queue0 and Queue1 of Broker1 and Queue2 of Broker2 are allocated to Proxy1, and Queue0 and Queue1 of Broker2 and Queue2 of Broker1 are allocated to Proxy2. Each Consumer node is connected to one Proxy node, where Consumer nodes concurrent consumer1, concurrent consumer2, and concurrent consumer3 are connected to Proxy1, and Consumer nodes order consumer1, order consumer2, and order consumer3 are connected to Proxy2. The Consumer node may obtain data from one or more Queues of the Proxy, where the Consumer nodes concurrent consumer1, concurrent consumer2, and concurrent consumer3 are connected to Proxy1 to obtain data from three Queues of Proxy1, and the Consumer nodes order consumer1, order consumer2, and order consumer3 obtain data from one Queue of Proxy2.

In the embodiments of the present disclosure, a two-level load balancing manner of two Rebalances is used to handle rebalance problems, and the two-level load balancing includes a Rebalance task that occurs when the Consumer node is reconnected and a Rebalance task that occurs when the Broker node is reconnected, and their influences are isolated from each other. The Rebalance task between the Proxy node and the Broker node is called Remote Rebalance, and the Rebalance task between the Proxy node and the Consumer node is called Local Rebalance. For the description of Remote Rebalance and Local Rebalance, reference may be made to subsequent embodiments, which will not be repeated here. In the embodiments of the present disclosure, Rebalance may be understood as a load balancing operation.

It may be understood by those skilled in the art that the schematic framework diagram shown in Fig. 1 is only an example in which the implementations of the present disclosure may be implemented. The scope of disclosure of the implementations of the present disclosure is not limited in any aspect by the framework.

In order to understand the embodiments of the present disclosure, a load balancing method for a message queue system provided by the embodiments of the present disclosure is described below with reference to the drawings.

Fig. 2 is a flowchart of a load balancing method for a message queue system provided by an embodiment of the present disclosure. As shown in Fig. 2, the method may include S201-S202.

S201: trigger, in response to a change in a connection state of a first consumer node, a first proxy node to perform a load balancing operation for consumer nodes connected to the first proxy node, where the first consumer node is any one of the consumer nodes, and the first proxy node is a proxy node connected to the first consumer node.

In the embodiment of the present disclosure, the message queue system may include a plurality of consumer nodes, a plurality of proxy nodes, and a plurality of message storage nodes (Broker nodes). When the connection state of any Consumer node (that is, a first consumer node) changes, a Local Rebalance is triggered. The change in the connection state includes addition, exit, or restart of the first Consumer node. Specifically, triggering a Local Rebalance in S201 may be understood as triggering the first proxy node connected to the first Consumer node to perform the load balancing operation for the connected Consumer nodes. That is, the first proxy node triggers a small-scale load balance, and other Consumer nodes follow the principle of sticky allocation, and the connection to the original Proxy node does not change. Consumer nodes connected to other Proxy nodes are not affected, and the connection between the Proxy node and the Broker node is not affected.

S202: trigger, in response to a change in a connection state of a first message storage node, a second proxy node to perform a load balancing operation for the message storage nodes, where the second proxy node is a proxy node connected to the first message storage node.

When the connection state of any Broker node (that is, a first Broker node) changes, a Remote Rebalance is triggered. The change in the connection state includes addition, exit, or restart of the first Broker node. Specifically, triggering a Remote Rebalance in S202 may be understood as triggering the second proxy node to perform the load balancing operation for the connected Broker nodes. The second proxy node may be understood as a proxy node related to the change in the connection state of the first Broker node. The second proxy node triggers a small-scale load balancing, and Consumer nodes connected to other Proxy nodes are not affected, and the connection between other Proxy nodes and the Broker node is not affected.

In the embodiments of the present disclosure, the proxy nodes are added to the message queue system, and the two-level load balance is implemented based on the proxy nodes. When the connection state of the first consumer node changes, only the first proxy node connected to the first consumer node is triggered to perform the load balancing operation for the consumer nodes, which does not affect other consumer nodes and the message storage nodes. When the connection state of the first message storage node changes, only the second proxy node related to this change in the connection state is triggered to perform the load balancing operation for the message storage nodes. That is, the load balancing policy adjustment is only performed in a local range, which effectively reduces the scope of influence of the load balancing policy adjustment and improves the overall performance of the message queue system.

The following continues to describe the Local Rebalance in the embodiments of the present disclosure.

In a possible implementation, a specific implementation of triggering, in response to the change in the connection state of the first consumer node, the first proxy node to perform the load balancing operation for the consumer nodes connected to the first proxy node in S201 may include:

A1: trigger, in response to the first consumer node being disconnected from the first proxy node, the first proxy node to allocate traffic of data queues of the first proxy node to consumer nodes currently connected to the first proxy node.

When the first consumer node exits the message queue system, the connection to the first proxy node is disconnected. The first proxy node reallocates the traffic of the data queues of the first proxy node to all Consumer nodes connected to the first proxy node, which only affects the Consumer nodes connected to the first proxy node. For example, the first proxy node may evenly allocate the traffic of the data queues of the first proxy node to all the Consumer nodes connected to the first proxy node, or the first proxy node may allocate the traffic of the data queues of the first proxy node to all the Consumer nodes connected to the first proxy node according to a correspondence between the data queues and the Consumer nodes.

A2: trigger, in response to the first consumer node being connected to the first proxy node, the first proxy node to allocate traffic of data queues of the first proxy node to consumer nodes currently connected to the first proxy node.

When the first Consumer node joins the message queue system, a proxy node with a current low load is selected to connect to, to implement global optimal load balancing, or the first Consumer node may also be connected to any proxy node. When the first Consumer node is connected to the first proxy node, the first proxy node evenly allocates the traffic of the data queues of the first proxy node to all Consumer nodes connected to the first proxy node, including the first Consumer node, which only affects the Consumer nodes connected to the first proxy node.

When the first Consumer node is restarted, it is equivalent to exiting the message queue system first and then joining the message queue system. When the first Consumer node exits the message queue system, the connection to the first proxy node is disconnected, and the first proxy node is triggered to allocate the traffic of the data queues of the first proxy node to the consumer nodes currently connected to the first proxy node. Then the first Consumer node rejoins the message queue system and selects a proxy node with a current low load. For example, the first consumer node is connected to the first proxy node, and the first proxy node is triggered to allocate the traffic of the data queues of the first proxy node to the consumer nodes currently connected to the first proxy node. It may be understood that when the first Consumer node is restarted, the proxy nodes connected before and after the restart may be different proxy nodes. In addition, the Consumer node periodically obtains the load of the Proxy node and connects to the Proxy node with a low load, to implement the global optimal load balancing.

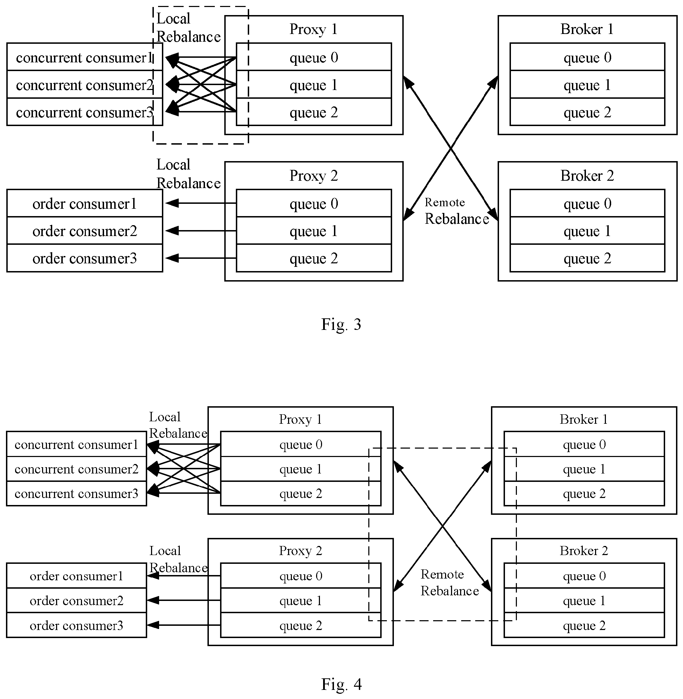

Fig. 3 is a schematic diagram showing the influence scope of Local Rebalance. The influence scope of Local Rebalance is within the dotted box. For example, when the first Consumer node concurrent consumer1 is disconnected from the first proxy node Proxy1, the first proxy node Proxy1 reallocates traffic of Queue0, Queue1, and Queue2 of Proxy1 to other Consumer nodes, concurrent consumer2 and concurrent consumer3, connected to Proxy1. In this way, only the Consumer nodes connected to the first proxy node Proxy 1 are affected, and the influence scope of load balance is reduced.

The following continues to describe the Remote Rebalance in the embodiments of the present disclosure.

In a possible implementation, a specific implementation of triggering, in response to the change in the connection state of the first message storage node, the second proxy node to perform the load balancing operation for the message storage nodes in S202 may include:
B1: trigger, in response to the first message storage node being disconnected from the second proxy node, to allocate traffic of data queues of other message storage nodes to the second proxy node.

When the first Broker node exits the message queue system, the connection to the second proxy node is disconnected, and the second proxy node no longer processes the traffic of the data queues of the first Broker node. The first Broker node may be connected to at least one second proxy node, and there may be one or more second proxy nodes. At this time, the number of data queues processed by the second proxy node is reduced, and a data queue of a Broker node processed by another proxy node is triggered to be allocated to the second proxy node for processing. For example, the first Broker node includes two data queues, and after being disconnected from the second proxy node Proxy1, one data queue of another Broker node processed by each of the other proxy nodes Proxy2 and Proxy3 may be allocated to Proxy1, so that the number of data queues of the Broker nodes processed by the proxy nodes Proxy1, Proxy2, and Proxy3 is as balanced as possible.

B2: trigger, in response to the first message storage node being connected to the second proxy node, to allocate traffic of data queues of the first message storage node to the second proxy node.

When the first Broker node joins the message queue system, a proxy node with a current low load connects to the first Broker node, and one or more proxy nodes connected to the first Broker node are second proxy nodes. The second proxy node is triggered to share the traffic of each data queue of the first Broker node, that is, the data queues of the first Broker node are allocated to each second proxy node for processing.

When the first Broker node is restarted, it is equivalent to exiting the message queue system first and then joining the message queue system. When the first Broker node exits the message queue system, the connection to the second proxy node is disconnected, and a data queue of a Broker node processed by another proxy node is triggered to be allocated to the second proxy node for processing. When the first Broker node joins the message queue system, the first Broker node is connected to the second proxy node, and the traffic of the data queues of the first message storage node is triggered to be allocated to the second proxy node. It may be understood that when the first Broker node is restarted, the proxy nodes connected before and after the restart may be different proxy nodes.

In addition, after the data queue processed by the second proxy node changes, a Local Rebalance may be triggered again to trigger the second proxy node to perform a load balancing operation for the consumer nodes connected to the second proxy node.

Fig. 4 is a schematic diagram showing the influence scope of Remote Rebalance. The influence scope of Remote Rebalance is within the dotted box. For example, when the first Broker node Broker 1 is disconnected from the second proxy node Proxy1, a part of data queues of Broker 2 processed by another proxy node Proxy2 are allocated to the second proxy node Proxy1 for processing. In this way, the connection between the proxy nodes Proxy1 and Proxy2 and the Broker node Broker 2 is affected, but there is still no impact on the global Proxy nodes and Broker nodes, and the influence scope of load balancing is reduced.

The embodiments of the present disclosure may further handle the load balancing operation in the scenario where the connection state of the Proxy node changes.

In a possible implementation, the method provided by the embodiment of the present disclosure may further include:
in response to a third proxy node joining the message queue system and the first consumer node being connected to the third proxy node, trigger to allocate traffic of data queues of the message storage nodes to the third proxy node, and triggering the third proxy node to allocate traffic of data queues of the third proxy node to consumer nodes currently connected to the third proxy node.

The impact of the change in the connection state of the above Consumer node and Broker node is reduced to a small scope, and when the Proxy node exits or joins, there is also a relatively small impact.

When the third proxy node joins the message queue system, no Queue is allocated initially. After the Consumer node detects the Proxy node with a low load, some Consumer nodes give up the original connection and reconnect to the newly added third proxy node. The third proxy node triggers a Remote Rebalance to preempt some Queues, that is, triggers the traffic of the data queues of the Broker node to be allocated to the third proxy node, and also triggers a Local Rebalance to allocate the traffic of the data queues of the third proxy node to the consumer nodes currently connected to the third proxy node.

In a possible implementation, the method provided by the embodiment of the present disclosure may further include:
in response to a third proxy node exiting the message queue system, trigger a consumer node connected to the third proxy node to be disconnected from the third proxy node, and trigger to allocate traffic of data queues of the third proxy node to other proxy nodes.

When a third proxy node needs to exit the message queue system, it first hides itself in service route discovery. The Consumer node finds that the third proxy node is not in the service route, then disconnects from the third proxy node, and reconnects to another Proxy node to trigger a Local Rebalance. When no Consumer node is connected to the third proxy node, a Remote Rebalance is triggered to release the Queues held by the third proxy node, and the released Queues are allocated to other proxy nodes for processing.

Compared with a single-level load balancing design, with the above two-level load balancing design, the influence scope of operations such as addition, exit, and restart of all components (the Consumer node, the Broker node, and the Proxy node) may be reduced. Based on the access of the proxy node, when there are local changes in the Consumer node and the Broker node, the load balancing operation adjustment only occurs in a local scope, and the normal consumption behavior of the consumer nodes of other proxy nodes is not affected, so that the impact of load balancing on consumption may be effectively reduced.

Based on the above embodiments, when the Remote Rebalance is triggered, there is room for further optimization on how to more efficiently allocate the data queues of the Broker node to the Proxy node when the Proxy node and the Broker node are performing the Rebalance task. In the embodiments of the present disclosure, a centralized load balancing system is further provided to further improve the efficiency of triggering the Remote Rebalance.

In practical disclosures, the centralized load balancing system may be composed of an independent distributed service, which is called a Coordinator and includes multiple nodes, one of which is a master node and the others are slave nodes. When a slave node monitors a service exception of the master node, it preempts and tries to become the master node.

The load balancing system has two functions: calculating a load balancing result and applying the load balancing result to a consumption scenario. Based on the centralized load balancing system, the above two functions are split, the load balancing result is calculated by the master node, and the load balancing result is executed by the proxy node in the message queue system.

The centralized load balancing system may use different types of Queue allocation policies according to requirements of actual disclosures. Especially in the scenario of multiple computer rooms and across computer rooms. The following modes may be supported: average allocation among multiple computer rooms, preferential allocation in this computer room, strict allocation in the same computer room, broadcast consumption in all computer rooms, allocation according to the weight of the number of connections of the Proxy node, etc., to generate a load balancing result of how to allocate the Queues of the Broker node to the Proxy node.

In a possible implementation, the method provided by the embodiment of the present disclosure may further include:
C1: obtain, through a center node, metadata information of the proxy nodes.

In the initialization process of the Coordinator, after the Coordinator determines a master node, the master node, as the center node, needs to wait to establish connections with all Proxy nodes, and the Proxy nodes report the metadata information of the Proxy nodes. The metadata information is, for example, all Group subscription information in the Proxy node, and the Group may be understood as a consumer group, so that it may be determined which Proxy nodes each Group is distributed on. When the center node collects the Group subscription information in the full amount of Proxy nodes, a correct Group subscription topology of the entire cluster may be formed. At the same time, the center node may further obtain the metadata of the topic and determine the relevant information of the data queues of the Broker node. At this time, rebalance may be correctly performed.

C2: determine a load balancing result according to the metadata information, and sending the load balancing result to the second proxy node.

In practical applications, Rebalance is triggered in the following cases: there is a change in the subscription information of the Group, there is a change in the metadata of the topic, the Coordinator is started for the first time, and there are operation and maintenance changes such as a restart of the Broker node or the Proxy node. When Rebalance needs to be triggered, the center node may determine the load balancing result according to the metadata information, for example, generate the load balancing result according to the metadata of the topic, a list of Proxy nodes determined by the Group subscription information, and a Rebalance policy. It is determined whether there is a change in the load balancing result, and if there is, the change is broadcast to all Rroxy nodes subscribing to the Group. In the Remote Rebalance scenario of the embodiments of the present disclosure, the load balancing result may be sent to the second proxy node.

A specific implementation of triggering the second proxy node to perform the load balancing operation for the message storage nodes in S202 may include:
triggering the second proxy node to perform, according to the load balancing result, the load balancing operation for the message storage nodes.

After receiving the load balancing result, the second proxy node applies it locally and then returns a status code of success to the center node. Specifically, the load balancing result includes a correspondence between the Proxy nodes and the data queues of the Broker nodes. For example, Queue0 and Queue1 of Broker1 and Queue2 of Broker2 are allocated to Proxy1, and Queue0 and Queue1 of Broker2 and Queue2 of Broker1 are allocated to Proxy2. After receiving status codes of all second proxy nodes for this Remote Rebalance, it indicates that this round of Remote Rebalance ends.

Through the center node, the second proxy node may directly perform the load balancing operation according to the load balancing result, thus improving the efficiency of the load balancing operation.

The embodiments of the present disclosure may further perform conflict resolution of Rebalance. In a possible implementation, the method provided by the embodiment of the present disclosure may further include:
in a case that the load balancing result is re-determined when the second proxy node has not completed the load balancing operation, sending the load balancing result to the second proxy node after a preset delay time.

In a case that the second proxy node is performing the load balancing operation but has not completed the load balancing operation, that is, has not yet returned the status code of success to the center node, and at this time, when a new load balancing result is generated, for example, there is a change in the metadata of the topic or the list of Proxy nodes, Rebalance needs to be performed again, then a conflict of Rebalance occurs. At this time, it is necessary to wait for the completion of the first round of Rebalance, and when the first round of Rebalance is completed, the second round of Rebalance is immediately executed.

In a case that Rebalance is not completed, a delay task is submitted to delay the second round of Rebalance, and after the preset delay time, a new rebalance is executed regardless of whether the first round of Rebalance is completed. For example, the preset delay time is 20 seconds, and the preset delay time is not limited in the embodiments of the present application.

In this way, a plurality of changes of the server node in a short period of time may be avoided, which triggers a plurality of Rebalance tasks and affects the stability of user consumption. Therefore, the frequency of load balancing may be controlled, and frequent Rebalance may be avoided.

In a possible implementation, the load balancing result carries a sequence number, and a specific implementation of triggering the second proxy node to perform, according to the load balancing result, the load balancing operation for the message storage nodes may include:
trigger the second proxy node to determine whether the sequence number of the load balancing result is greater than a sequence number of a load balancing result corresponding to an executed load balancing operation; and
in response to the sequence number of the load balancing result being greater than the sequence number of the load balancing result corresponding to the executed load balancing operation, trigger the second proxy node to perform, according to the load balancing result, the load balancing operation for the message storage nodes.

In order to distinguish multiple load balancing results, the sequence number may be used to indicate the sequence of generation of the load balancing results. The sequence number is increased by one every time a load balancing result is generated, and the load balancing result needs to carry the sequence number.

After receiving the load balancing result, the second proxy node compares the sequence number of the load balancing result corresponding to the executed load balancing operation with the sequence number of the received new load balancing result. When the sequence number of the newly received load balancing result is larger, the new load balancing result is directly effective. When the sequence number is the same or smaller, the load balancing operation is not performed according to the load balancing result, and the load balancing result may be discarded. The second proxy node returns a success status code to the center node after completing the load balancing operation according to the new load balancing result.

In the design of the centralized load balancing system in the embodiments of the present disclosure, the load balancing efficiency is greatly improved, and the load balancing result may be quickly generated when the server or the client changes, to reduce problems such as consumption delay and consumption accumulation caused by low load balancing efficiency. An independent distributed system is used to replace the original service thread, to improve the fault tolerance and provide the independent expansion capability of the load balancing system.

Based on the load balancing method for the message queue system provided by the above method embodiments, an embodiment of the present disclosure further provides a load balancing apparatus for a message queue system, which is described below with reference to the drawings.

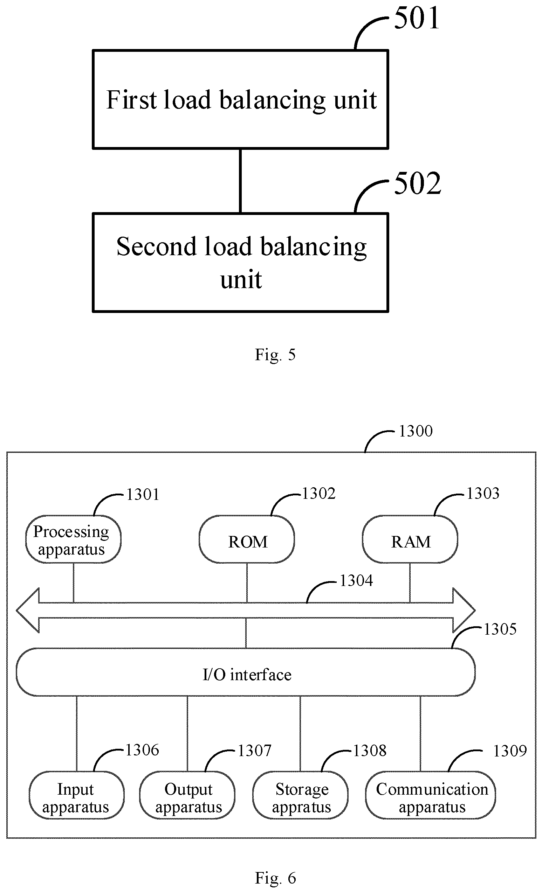

Fig. 5 is a schematic diagram of a structure of a load balancing apparatus for a message queue system provided by an embodiment of the present disclosure. The message queue system includes consumer nodes, proxy nodes, and message storage nodes. As shown in Fig. 5, the load balancing apparatus for the message queue system includes:
a first load balancing unit 501 configured to trigger, in response to a change in a connection state of a first consumer node, a first proxy node to perform a load balancing operation for consumer nodes connected to the first proxy node, where the first consumer node is any one of the consumer nodes, and the first proxy node is a proxy node connected to the first consumer node; and
a second load balancing unit 502 configured to trigger, in response to a change in a connection state of a first message storage node, a second proxy node to perform a load balancing operation for the message storage nodes, where the second proxy node is a proxy node connected to the first message storage node.

In a possible implementation, the first load balancing unit is further configured to:
trigger, in response to the first consumer node being disconnected from the first proxy node, the first proxy node to allocate traffic of data queues of the first proxy node to consumer nodes currently connected to the first proxy node; and
trigger, in response to the first consumer node being connected to the first proxy node, the first proxy node to allocate traffic of data queues of the first proxy node to consumer nodes currently connected to the first proxy node.

In a possible implementation, the second load balancing unit is further configured to:
trigger, in response to the first message storage node being disconnected from the second proxy node, to allocate traffic of data queues of other message storage nodes to the second proxy node; and
trigger, in response to the first message storage node being connected to the second proxy node, to allocate traffic of data queues of the first message storage node to the second proxy node.

In a possible implementation, the apparatus further includes:
a third load balancing unit configured to, in response to a third proxy node joining the message queue system and a first consumer node being connected to the third proxy node, trigger to allocate traffic of data queues of the message storage nodes to the third proxy node, and trigger the third proxy node to allocate traffic of data queues of the third proxy node to consumer nodes currently connected to the third proxy node.

In a possible implementation, the apparatus further includes:
a fourth load balancing unit configured to, in response to a third proxy node exiting the message queue system, trigger consumer nodes connected to the third proxy node to be disconnected from the third proxy node, and trigger to allocate traffic of data queues of the third proxy node to other proxy nodes.

In a possible implementation, the apparatus further includes:
an obtaining unit configured to obtain, through a center node, metadata information of the proxy nodes; and
a sending unit configured to determine a load balancing result according to the metadata information, and send the load balancing result to the second proxy node;
where the second load balancing unit is further configured to:
   trigger the second proxy node to perform, according to the load balancing result, the load balancing operation for the message storage nodes.

In a possible implementation, the sending unit is further configured to:
in case that the load balancing result is re-determined when the second proxy node has not completed the load balancing operation, send the load balancing result to the second proxy node after a preset delay time.

In a possible implementation, the load balancing result carries a sequence number, and the second load balancing unit is further configured to:
trigger the second proxy node to determine whether the sequence number of the load balancing result is greater than a sequence number of a load balancing result corresponding to an executed load balancing operation; and
in response to the sequence number of the load balancing result being greater than the sequence number of the load balancing result corresponding to the executed load balancing operation, trigger the second proxy node to perform, according to the load balancing result, the load balancing operation for the message storage nodes.

An embodiment of the present disclosure further provides a computer program product, including computer program instructions that, when executed on a computer, cause the computer to perform the load balancing method for the message queue system as described in any one of the above.

Based on the load balancing method for the message queue system provided by the above method embodiments, the present disclosure further provides an electronic device, including: one or more processors; and a storage apparatus having stored thereon one or more programs that, when executed by the one or more processors, cause the one or more processors to implement the load balancing method for the message queue system described in any one of the above embodiments.

Reference is made to Fig. 6 below, which is a schematic diagram of a structure of an electronic device 1300 suitable for implementing an embodiment of the present disclosure. The terminal device in the embodiments of the present disclosure may include, but is not limited to, mobile terminals such as a mobile phone, a notebook computer, a digital broadcast receiver, a PDA (Personal Digital Assistant), a tablet computer, a PMP (Portable Media Player), an in-vehicle terminal (e.g., an in-vehicle navigation terminal), etc., and fixed terminals such as a digital TV (television), a desktop computer, etc. The electronic device shown in Fig. 6 is only an example, and should not impose any limitation on the function and scope of use of the embodiments of the present disclosure.

As shown in Fig. 6, the electronic device 1300 may include a processing apparatus (e.g., a central processing unit, a graphics processor, etc.) 1301 that may perform various appropriate actions and processing according to a program stored in a read-only memory (ROM) 1302 or a program loaded from a storage apparatus 1306 into a random access memory (RAM) 1303. The RAM 1303 further stores various programs and data required for operations of the electronic device 1300. The processing apparatus 1301, the ROM 1302, and the RAM 1303 are interconnected by means of a bus 1304. An input/output (I/O) interface 1305 is also connected to the bus 1304.

Usually, the following apparatuses may be connected to the I/O interface 1305: an input apparatus 1306 including, for example, a touch screen, a touchpad, a keyboard, a mouse, a camera, a microphone, an accelerometer, a gyroscope, etc.; an output apparatus 1307 including, for example, a liquid crystal display (LCD), a speaker, a vibrator, etc.; the storage apparatus 1306 including, for example, a magnetic tape, a hard disk, etc.; and a communication apparatus 1309. The communication apparatus 1309 may allow the electronic device 1300 to perform wireless or wired communication with other devices to exchange data. While Fig. 6 shows the electronic device 1300 with various apparatuses, it should be understood that not all of the illustrated apparatuses are necessarily implemented or included. More or fewer apparatuses may be implemented or included alternatively.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network via the communication apparatus 1309, or installed from the storage apparatus 1306, or installed from the ROM 1302. When the computer program is executed by the processing apparatus 1301, the above-mentioned functions defined in the method of the embodiments of the present disclosure are executed.

The electronic device provided by the embodiment of the present disclosure belongs to the same inventive concept as the load balancing method for the message queue system provided by the above embodiments. For technical details not described in detail in this embodiment, reference may be made to the above embodiments, and this embodiment has the same beneficial effects as the above embodiments.

Based on the load balancing method for the message queue system provided by the above method embodiments, an embodiment of the present disclosure provides a computer-readable medium having stored thereon a computer program that, when executed by a processor, causes the load balancing method for the message queue system described in any one of the above embodiments to be implemented.

It should be noted that the above computer-readable medium in the embodiments of the present disclosure may be a computer-readable signal medium, a computer-readable storage medium, or any combination thereof. The computer-readable storage medium may be, for example, but is not limited to, an electrical, magnetic, optical, electromagnetic, infrared, or semi-conductive system, apparatus or device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the embodiments of the present disclosure, the computer-readable storage medium may be any tangible medium that contains or stores a program, which may be used by or in combination with an instruction execution system, apparatus, or device. In the embodiments of the present disclosure, the computer-readable signal medium may include a data signal propagated on a baseband or as a part of a carrier, and computer-readable program code is carried therein. This propagated data signal may take many forms, including but not limited to an electromagnetic signal, an optical signal, or any suitable combination thereof. The computer-readable signal medium may also be any computer-readable medium other than the computer-readable storage medium, and the computer-readable signal medium may send, propagate, or transmit a program for use by or in combination with an instruction execution system, apparatus, or device. The program code contained on the computer-readable medium may be transmitted by any suitable medium, including but not limited to: a wire, an optical cable, an RF (Radio Frequency), etc., or any suitable combination thereof.

In some implementations, the client and the server may communicate using any currently known or future developed network protocol, such as HTTP (HyperText Transfer Protocol), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or may exist alone without being assembled into the electronic device.

The above computer-readable medium carries one or more programs that, when executed by the electronic device, cause the electronic device to perform the above load balancing method for the message queue system.

The computer program code for performing the operations of the embodiments of the present disclosure may be written in one or more programming languages or a combination thereof. The above programming languages include, but are not limited to, object-oriented programming languages such as Java, Smalltalk, and C++, and conventional procedural programming languages such as "C" language or similar programming languages. The program code may be executed entirely on a user's computer, partly executed on a user's computer, executed as an independent software package, partly executed on a user's computer and partly executed on a remote computer, or entirely executed on a remote computer or server. In the case involving a remote computer, the remote computer may be connected to the user's computer through any kind of network, including a local area network (LAN) or a wide area network (WAN), or may be connected to an external computer (for example, connected through the Internet using an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a unit/module does not constitute a limitation on the unit itself under certain circumstances.

The functions described herein may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the embodiments of the present disclosure, the machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semi-conductive system, apparatus, or device, or any suitable combination thereof. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

It should be noted that the embodiments in this specification are described in a progressive manner, and each embodiment focuses on the differences from other embodiments. For the same and similar parts between the embodiments, reference may be made to each other. For the system or apparatus disclosed in the embodiments, since it corresponds to the method disclosed in the embodiments, the description is relatively simple, and reference may be made to the description of the method for the relevant parts.

It should be understood that in the present disclosure, "at least one item" means one or more, and "a plurality of' means two or more. "And/or" describes an association relationship between associated objects, indicating that three relationships may exist, for example, "A and/or B" may indicate three cases: only A exists, only B exists, and both A and B exist, where A and B may be singular or plural. The character "/" generally indicates an "or" relationship between associated objects. "At least one of the following items (pieces)" or a similar expression thereof indicates any combination of these items, including a single item (piece) or any combination of plural items (pieces). For example, at least one of a, b, or c may represent: a, b, c, "a and b", "a and c", "b and c", or "a, b, and c", where a, b, and c may be single or multiple.

It should also be noted that in this article, relational terms such as first and second are only used to distinguish one entity or operation from another entity or operation, and do not necessarily require or imply any actual relationship or order between these entities or operations. Furthermore, terms "include", "include", or any other variation thereof are intended to cover a non-exclusive inclusion, such that a process, method, object, or device including a series of elements includes not only those elements, but also other elements not explicitly listed or elements inherent to such process, method, object, or device. Without further restrictions, an element defined by the phrase "including a" does not exclude the existence of other identical elements in the process, method, object, or device including the element.

The steps of the method or algorithm described in connection with the embodiments disclosed herein may be directly implemented by hardware, a software module executed by a processor, or a combination thereof. The software module may be placed in a random access memory (RAM), a memory, a read-only memory (ROM), an electrically programmable ROM, an electrically erasable programmable ROM, a register, a hard disk, a removable magnetic disk, a CD-ROM, or any other form of storage medium known in the art.

The above description of the disclosed embodiments enables those skilled in the art to implement or use the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments shown herein, but rather to the widest scope consistent with the principles and novel features disclosed herein.

## Claims

1. A load balancing method for a message queue system, wherein the message queue system comprises consumer nodes, proxy nodes, and message storage nodes, and the method comprises:
triggering, in response to a change in a connection state of a first consumer node, a first proxy node to perform a load balancing operation for consumer nodes connected to the first proxy node(S201), wherein the first consumer node is any one of the consumer nodes, and the first proxy node is a proxy node connected to the first consumer node; and
triggering, in response to a change in a connection state of a first message storage node, a second proxy node to perform a load balancing operation for the message storage nodes(S202), wherein the second proxy node is a proxy node connected to the first message storage node.

2. The method of claim 1, wherein the triggering, in response to a change in a connection state of a first consumer node, a first proxy node to perform a load balancing operation for consumer nodes connected to the first proxy node comprises:
triggering, in response to the first consumer node being disconnected from the first proxy node, the first proxy node to allocate traffic of data queues of the first proxy node to consumer nodes currently connected to the first proxy node; and
triggering, in response to the first consumer node being connected to the first proxy node, the first proxy node to allocate traffic of data queues of the first proxy node to consumer nodes currently connected to the first proxy node.

3. The method of claim 1 or 2, wherein the triggering, in response to a change in a connection state of a first message storage node, a second proxy node to perform a load balancing operation for the message storage nodes comprises:
triggering, in response to the first message storage node being disconnected from the second proxy node, to allocate traffic of data queues of other message storage nodes to the second proxy node; and
triggering, in response to the first message storage node being connected to the second proxy node, to allocate traffic of data queues of the first message storage node to the second proxy node.

4. The method of any of claims 1 to 3, further comprising:
in response to a third proxy node joining the message queue system and the first consumer node being connected to the third proxy node, triggering to allocate traffic of data queues of the message storage nodes to the third proxy node, and triggering the third proxy node to allocate traffic of data queues of the third proxy node to consumer nodes currently connected to the third proxy node.

5. The method of any of claims 1 to 3, further comprising:
triggering, in response to a third proxy node exiting the message queue system, consumer nodes connected to the third proxy node to be disconnected from the third proxy node, and triggering traffic of data queues of the third proxy node to be allocated to other proxy nodes.

6. The method of any of claims 1 to 5, further comprising:
obtaining, through a center node, metadata information of the proxy nodes; and
determining a load balancing result according to the metadata information, and sending the load balancing result to the second proxy node;
wherein triggering the second proxy node to perform the load balancing operation for the message storage nodes comprises:
triggering the second proxy node to perform, according to the load balancing result, the load balancing operation for the message storage nodes.

7. The method of claim 6, further comprising:
in a case that the load balancing result is re-determined when the second proxy node has not completed the load balancing operation, sending the load balancing result to the second proxy node after a preset delay time.

8. The method of claim 6 or 7, wherein the load balancing result carries a sequence number, and the triggering the second proxy node to perform, according to the load balancing result, the load balancing operation for the message storage nodes comprises:
triggering the second proxy node to determine whether the sequence number of the load balancing result is greater than a sequence number of a load balancing result corresponding to an executed load balancing operation; and
in response to the second proxy node to determining that the sequence number of the load balancing result is greater than the sequence number of the load balancing result corresponding to the executed load balancing operation, triggering the second proxy node to perform, according to the load balancing result, the load balancing operation for the message storage nodes.

9. A load balancing apparatus for a message queue system, wherein the message queue system comprises consumer nodes, proxy nodes, and message storage nodes, and the apparatus comprises:
a first load balancing unit(501), configured to trigger, in response to a change in a connection state of a first consumer node, a first proxy node to perform a load balancing operation for consumer nodes connected to the first proxy node, wherein the first consumer node is any one of the consumer nodes, and the first proxy node is a proxy node connected to the first consumer node; and
a second load balancing unit(502), configured to trigger, in response to a change in a connection state of a first message storage node, a second proxy node to perform a load balancing operation for the message storage nodes, wherein the second proxy node is a proxy node connected to the first message storage node.

10. The device of claim 9, wherein the first load balancing unit(501) is further configured to:
trigger, in response to the first consumer node being disconnected from the first proxy node, the first proxy node to allocate traffic of data queues of the first proxy node to consumer nodes currently connected to the first proxy node; and
trigger, in response to the first consumer node being connected to the first proxy node, the first proxy node to allocate traffic of data queues of the first proxy node to consumer nodes currently connected to the first proxy node.

11. The apparatus of claim 9 or 10, wherein the second load balancing unit(502) is further configured to:
trigger, in response to the first message storage node being disconnected from the second proxy node, to allocate traffic of data queues of other message storage nodes to the second proxy node; and
trigger, in response to the first message storage node being connected to the second proxy node, to allocate traffic of data queues of the first message storage node to the second proxy node.

12. The apparatus of any of claims 9 to 11, further comprising:
a third load balancing unit, configured to, in response to a third proxy node joining the message queue system and the first consumer node being connected to the third proxy node, trigger to allocate traffic of data queues of the message storage nodes to the third proxy node, and trigger the third proxy node to allocate traffic of data queues of the third proxy node to consumer nodes currently connected to the third proxy node.

13. The apparatus of any of claims 9 to 11, further comprising:
a fourth load balancing unit, configured to trigger, in response to a third proxy node exiting the message queue system, a consumer node connected to the third proxy node to be disconnected from the third proxy node, and trigger traffic of data queues of the third proxy node to be allocated to other proxy nodes.

14. A load balancing device for a message queue system, comprising: a memory, a processor, and a computer program stored on the memory and executable on the processor, wherein the computer program, when executed by the processor, causes the load balancing method for the message queue system of any of claims 1 to 8 to be implemented.

15. A computer-readable storage medium having stored thereon instructions that, when executed by a terminal device, cause the terminal device to perform the load balancing method for the message queue system of any of claims 1 to 8.
